# FASCICULE DE BREVET EUROPEEN

(11) **EP 0 788 636 B1**
(45) Date de publication et mention de la délivrance du brevet: **07.10.1998**
(21) Numéro de dépôt: 93904118.2
(22) Date de dépôt: 26.01.1993
(51) Int. Cl.: G06K 19/07

(54) **CARTE A PUCE A DEUX CONTACTS ET PROCEDE DE COMMUNICATION AVEC UN LECTEUR DE CARTE**
IC-KARTE MIT ZWEI KONTAKTEN UND DATENAUSTAUSCHVERFAHREN ÜBER EINEN KARTENLESER
TWIN-CONTACT CHIP CARD AND COMMUNICATION METHOD WITH A CARD READER

(30) Priorité: 30.01.1992 FR 9201038
(43) Date de publication de la demande: 13.08.1997
(73) Titulaire: GEMPLUS CARD INTERNATIONAL, F-13420 Gémenos (FR)
(72) Inventeur: KOWALSKI, Jacek, F-13530 Trets (FR); SUREAUD, Jean, F-83330 Le Beausset (FR)
(74) Mandataire: Schmit, Christian Norbert Marie
(86) Numéro de dépôt international: FR9300074
(87) Numéro de publication internationale: WO9315477

(56) Documents cités:
- EP-A- 0 287 175
- WO-A-86/04171
- FR-A- 2 374 697
- FR-A- 2 608 293
- GB-A- 2 020 869

## Description

L'invention concerne les cartes à puces, telles que les cartes à mémoires ou à microprocesseur.

Ces cartes sont utilisées dans un nombre croissant d'applications et un facteur essentiel de leur succès réside dans la possibilité de les fabriquer à bas coût. Par exemple pour des applications à des transactions commerciales de faible valeur (carte téléphonique prépayée, cartes prépayées de stationnement de véhicules, etc.) il est très important que le coût de fabrication de la carte soit faible devant la valeur commerciale des services fournis par la carte.

Pour fabriquer une carte à puce, on monte dans un support de matière plastique (la carte proprement dite) un micromodule comportant une puce de circuit-intégré, un connecteur à plusieurs contacts et des fils de liaison entre la puce et le connecteur. Le connecteur de la carte à puce est constitué par le connecteur du micromodule.

On s'aperçoit que dans le coût de fabrication du micromodule, les opérations d'assemblage de la puce dans le micromodule coûtent beaucoup plus cher que la puce elle-même. Le rapport peut aller jusqu'à 4:1.

Pour réduire le coût global de la carte, il est donc avantageux d'optimiser les opérations d'assemblage de la puce dans le micromodule, même si cela rend plus complexe les circuits de la puce. Les documents, WO-A-8 604 171, EP-A-0 287 175,et FR-A-2 608 293 présentent de telles réalisations.

Parmi les solutions envisagées, il y a la réduction du nombre de contacts du connecteur, et donc du nombre de fils de connexion (qui sont soudés par la technique dite "wire-bonding") entre la puce et le connecteur; ce nombre influe directement sur le coût de l'assemblage. Actuellement, les cartes ont huit contacts au maximum selon la norme ISO 7816. Souvent, cinq ou six seulement de ces contacts sont effectivement utilisés.

Si on pouvait passer à deux contacts seulement, le coût serait notablement réduit. De plus, en réduisant le nombre de contacts on réduit les risques de décharges électrostatiques qui peuvent endommager les puces. On réduit également la surface de la puce (dont une large partie sert uniquement à placer les plots de contact qui doivent recevoir les fils de liaison avec le connecteur); le coût de la puce en est réduit d'autant. Enfin, si on n'utilise que deux contacts, on peut envisager des applications de cartes à puces sous des formats autres que les cartes de crédit qui constituent le format le plus courant des cartes à puces actuelles (carte plate de 5 cm environ sur 8 cm environ, de l'ordre du millimètre en épaisseur). Par exemple, on peut envisager des pièces à puces (format analogue à une pièce de monnaie), ou des clés à puces (format analogue à une clé); dans ces formats il serait particulièrement avantageux d'avoir deux contacts seulement, pour supprimer le plus possible les exigences de positionnement correct de la carte dans le lecteur.

Mais bien entendu il n'est pas facile de proposer une carte n'ayant que deux contacts car il faut d'une part alimenter la carte en énergie et d'autre part permettre la communication bidirectionnelle entre la carte et le lecteur dans lequel elle est insérée. A titre d'exemple, dans les cartes téléphoniques actuelles utilisées en France, il y a sept contacts utiles qu'on peut appeler VCC, VSS, VPP, CLK, I/O, RST, FUSE, plus un contact inutilisé (PROG); ils correspondent respectivement à :
VCC : tension d'alimentation positive 5 volts
VSS : masse
VPP : tension de programmation (environ 21 v)
CLK : horloge
I/O : sortie de données pour la lecture dans une mémoire de la carte;
FUSE : contact d'activation générale et réinitialisation;
RST : définit s'il s'agit d'une opération d'incrémentation (RST = 0) ou de programmation (RST = 1) sur front montant de l'horloge CLK.

On comprendra aisément qu'il n'est pas facile d'obtenir les mêmes fonctions avec deux contacts seulement.

Des tentatives ont cependant été faites pour proposer des cartes fonctionnant avec deux contacts seulement (voir par exemple FR-A-2 608 293). Les propositions faites se fondent essentiellement sur l'utilisation du contact de masse VSS et du contact d'alimentation VCC, avec une modulation d'amplitude de la tension présente sur le contact VCC. La présence permanente d'une tension d'alimentation fournit l'énergie d'alimentation de la carte; la modulation de cette tension représente les informations échangées entre la carte et le lecteur. Mais ces solutions ne donnent pas satisfaction; la détection d'amplitude est délicate à maîtriser dans des technologies classiques de puces de circuit-intégré. De plus, la compatibilité avec les lecteurs de cartes déjà en service est impossible et il faudrait changer tous les lecteurs existants s'il fallait qu'ils puissent recevoir des cartes à deux contacts. Les lecteurs n'ont pas de circuits permettant la modulation de la tension d'alimentation, et par conséquent on ne peut pas concevoir pour ces lecteurs de logiciels d'utilisation qui agiraient par l'intermédiaire de cette technique.

La présente invention se fonde sur une approche nouvelle qui est l'utilisation du contact d'horloge CLK et du contact d'entrée/sortie de données I/O pour effectuer la quasi-totalité des opérations normalement effectuée par une carte à puce classique, y compris si on le désire la transmission à la carte de l'énergie nécessaire à son fonctionnement. On montrera alors qu'il est possible de réaliser une carte à puce n'ayant que ces deux contacts, et on montrera qu'on peut trouver un protocole de communication qui permette une compatibilité avec les lecteurs existants, ce qui ne serait pas possible avec les solutions à deux contacts proposées dans l'art antérieur.

L'invention a plus particulièrement pour objet un support à puce selon les caractéristiques de la revendications 1.

Le redresseur dans le support sert à produire une tension d'alimentation de la carte à partir de niveaux de tension alternés sur les deux contacts. C'est de préférence un redresseur double alternance. Il peut être composé d'un pont de quatre diodes selon un montage classique dans le domaine des alimentations en tension continue à partir d'une tension alternative.

On utilise donc là de manière inattendue l'énergie des signaux servant à l'échange d'information pour alimenter la carte en tension continue, en profitant du fait que ces signaux seront souvent dans des états logiques différents et donc à des potentiels différents.

Le redressement double alternance est bien entendu préférable si on veut récupérer le plus d'énergie possible; la récupération se fait en effet alors quel que soit le sens de la tension présente entre les contacts. Il faut comprendre que les deux contacts reçoivent du lecteur des niveaux logiques qui varient en permanence au cours d'un échange d'informations, et que la probabilité pour que les deux contacts restent au même potentiel pendant une durée trop grande est très faible. La procédure de communication d'informations (données ou instructions) permet donc d'alimenter la carte en permanence.

On verra comment le support ne comportant que deux contacts (CLK et I/O), au lieu d'un contact de masse et d'un contact d'alimentation permet notamment une compatibilité avec les lecteurs de carte existants : la raison principale en est que les lecteurs connus sont conçus pour fonctionner sous le contrôle de logiciels dont la tâche principale est de définir les signaux d'horloge (CLK) et les signaux d'entrée/sortie (I/O), et d'autres signaux encore mais pas la tension d'alimentation. Ces lecteurs pourront donc toujours servir, seuls les logiciels étant à modifier. Ceci n'est pas possible avec une carte à deux contacts dont les contacts seraient un contact de masse et un contact d'alimentation modulée en amplitude.

Bien entendu, le redresseur double alternance mentionné plus haut pourra être utilisé si on veut que les contacts servent non seulement à la communication bidirectionnelle mais aussi à la transmission de l'énergie nécessaire à la carte.

Enfin, selon un deuxième aspect, l'invention concerne un protocole de communication original permettant d'avoir avec un support à deux contacts globalement les mêmes possibilités d'échange d'information qu'avec les cartes actuelles à 6 ou 8 contacts.

Selon ce deuxième aspect, l'invention propose un procédé de communication entre un support à puce et un lecteur de support, par l'intermédiaire d'un contact d'horloge CLK contrôlé par le lecteur et d'un contact d'entrée/sortie de données I/O, procédé qui est caractérisé en ce que :
a./ l'écriture d'un bit d'information dans une cellule de mémoire du support se fait immédiatement après une opération de lecture de l'état de ce bit;
b./ un ordre d'écriture est donné par le lecteur à l'aide des contacts CLK et I/O uniquement si le bit lu est l'inverse logique du bit à écrire, l'ordre d'écriture étant donné sous une forme indépendante de la valeur de bit à écrire;
c./en présence d'un ordre d'écriture reçu du lecteur, le support effectue une opération de programmation ou d'effacement en fonction de la valeur de bit lue.

Par conséquent, lorsqu'une information doit être écrite dans une cellule de mémoire du support, le lecteur n'envoie pas un ordre choisi parmi deux ordres possibles différents (ordre de programmation et ordre d'effacement), mais il envoie un ordre unique d'écriture. Le logiciel du lecteur n'envoie un ordre d'écriture que si l'état du bit à écrire n'est pas celui qui vient d'être lu. Et le support interprète l'ordre d'écriture reçu, également en fonction de l'état du bit lu juste auparavant, pour le transformer soit en ordre de programmation soit en ordre d'effacement.

Cette particularité permet d'établir un protocole de communication complet, incluant d'ailleurs éventuellement d'autres instructions que la lecture et l'écriture, ceci avec seulement les deux contacts CLK et I/O mentionnés ci-dessus. De plus, cette particularité présente l'avantage d'empêcher toute surprogrammation ou tout sureffacement d'une cellule de mémoire, malgré le fait que l'ordre d'écriture est unique pour l'effacement et la programmation. Une surprogrammation (ou un sureffacement) se produit lorsqu'un ordre de programmation (ou d'effacement) est donné alors que la cellule est déjà programmée (ou effacée). Cette surprogrammation était évitée dans l'art antérieur avec des protocoles dans lesquels le lecteur peut donner deux ordres différents.

De préférence, la lecture de l'état d'un bit se déroule selon le protocole suivant, les différentes phases se déroulant dans l'ordre indiqué : forçage du contact I/O par le lecteur à un premier état, pendant que CLK est à un premier niveau; premier changement de niveau de CLK; libération du potentiel du contact I/O par le lecteur; forçage par la carte du contact à un état correspondant à l'information à transmettre; lecture de l'état logique du contact I/O par le lecteur avant un deuxième changement de niveau de CLK vers son premier niveau.

Le lecteur force de préférence le contact I/O à un deuxième état, après la lecture et avant le deuxième changement de niveau de CLK.

L'écriture peut s'effectuer de préférence selon le protocole suivant : pendant que CLK est à son premier niveau, après une opération de lecture, une impulsion courte est fournie par le lecteur sur le contact I/O, faisant passer ce contact au premier état et le ramenant au deuxième état; l'écriture se fait après cette impulsion courte, pendant le temps que le contact I/O reste forcé au deuxième état et à condition que CLK reste au premier état.

Pour une carte à puce ayant une mémoire munie de moyens d'incrémentation de position de cellule à lire ou à écrire, on prévoit de préférence que l'ordre d'incrémentation est constitué par la première partie de l'ordre de lecture, à savoir le passage de CLK au deuxième niveau après forçage de I/O au premier état.

Dans certaines cartes à mémoire présentant une certaine sécurité contre les tentatives de communication frauduleuses, par exemple à l'aide de codes confidentiels, on peut prévoir que deux ordres supplémentaires peuvent être donnés par le lecteur à la carte. Il s'agit d'ordres de comparaison d'un bit de mémoire de la carte à une valeur indiquée par le lecteur. On verra plus loin que ces ordres peuvent être exécutés en plus des ordres précédents, toujours avec les deux contacts CLK et I/O. D'autres ordres peuvent encore être exécutés selon le protocole de communication à deux contacts qui fait l'objet de cette invention; il s'agit par exemple d'un ordre de remise à zéro du compteur d'incrémentation et d'un ordre de mise en attente à basse puissance.

D'autres caractéristiques et avantages de l'invention apparaîtront à la lecture de la description détaillée qui suit et qui est faite en référence aux dessins annexés dans lesquels :
- la figure 1 représente les contacts d'une carte à puce classique à huit contacts normalisés;
- la figure 2 représente une carte à puce selon l'invention avec deux contacts seulement;
- la figure 3 représente une pièce à puce ayant deux contacts situés chacun sur une face de la pièce;
- la figure 4 représente un schéma électrique d'une partie de la puce de la carte selon l'invention;
- la figure 5 représente une variante de réalisation du schéma de la figure 4;
- la figure 6 représente un schéma général de circuit de carte à puce permettant de mettre en oeuvre la présente invention;
- les figures 7 à 11 représentent le protocole de communication entre la carte et le lecteur, et plus précisément : figure 7 la lecture d'un bit information contenu dans la carte; figure 8 l'écriture; figure 9 la remise à zéro du compteur d'adresses de la carte; figure 10 les ordres de comparaison pour la validation d'un code confidentiel; figure 11 la mise en attente à consommation réduite.

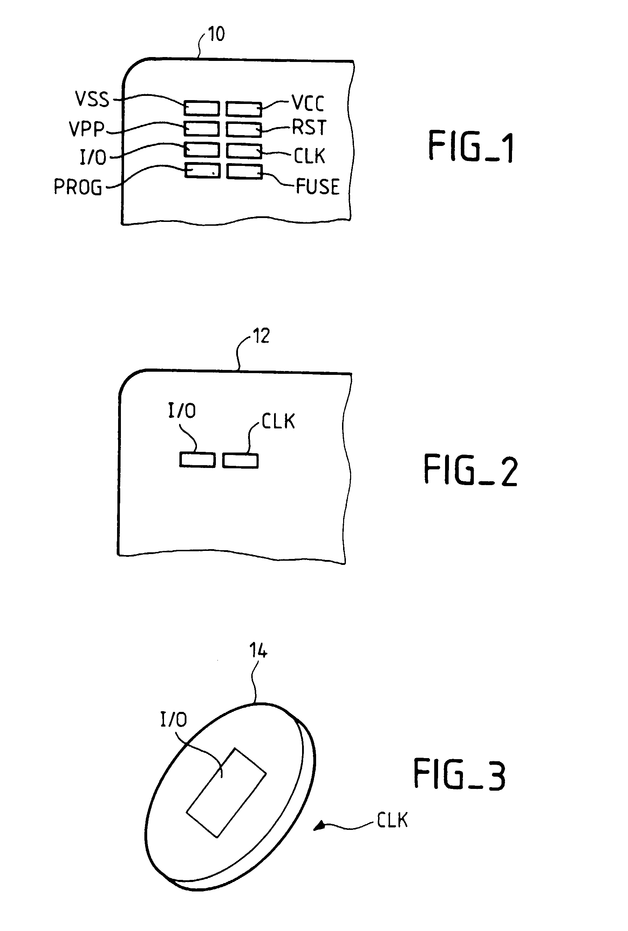

Sur la figure 1 on a représenté une carte à puce classique 10 telle qu'une carte au format carte de crédit à huit contacts affleurants en surface. Les huit contacts sont ceux qui ont été mentionnés plus haut avec les significations indiquées, VCC, VSS, VPP, RST, I/O, CLK, FUSE, PROG. Selon les normes utilisées, qui ne sont pas les mêmes dans tous les pays, la signification des contacts RST, FUSE et PROG peut varier. Mais les contacts d'alimentation VCC, VSS, VPP, le contact d'entrée/sortie de données I/O, et le contact d'horloge CLK ont une signification identique dans les protocoles normalisés qui sont utilisés en pratique aujourd'hui.

La figure 2 représente une carte 12 selon un mode de réalisation préférentiel de l'invention. Sa particularité est qu'elle ne possède que deux contacts pouvant servir à la fois à l'alimentation et à l'échange d'informations, ces contacts étant un contact d'entrée/sortie de données I/O et un contact d'horloge CLK. Par l'expression "contact d'entrée/sortie de données" on entend un contact destiné d'une part à recevoir des niveaux logiques de tension représentant des informations (données ou instructions) fournies par un lecteur de carte, lorsque la carte est insérée dans le lecteur, et d'autre part à fournir à destination du lecteur des informations en provenance de la carte. Par "contact d'horloge", on entend un contact qui est destiné à recevoir du lecteur des niveaux logiques de tension alternés pour définir des instants d'exécution d'instructions. La combinaison à un moment donné des états ou transitions du contact d'horloge et des états ou transitions du contact I/O définira les différentes opérations de la carte.

Si la carte n'a que deux contacts, elle peut avoir la forme particulièrement simple représentée à la figure 3, connue sous le nom de pièce à puce : une puce est noyée dans un module 14 en forme de disque et de la taille d'une pièce de monnaie par exemple; un contact CLK est prévu sur une face, un contact I/O sur l'autre. Les problèmes de positionnement de la carte dans un lecteur sont très simplifiés par rapport à une carte de format carte de crédit.

Dans le cas d'une carte qui conserve le format standard d'une carte de crédit (figure 2), on prévoit de préférence que la position des deux contacts qui restent, I/O et CLK, est exactement la même que celle des contacts correspondants I/O et CLK des cartes à huit contacts. De cette manière, les cartes pourront être utilisées dans des lecteurs existants, avec seulement une modification des logiciels de fonctionnement de ceux-ci.

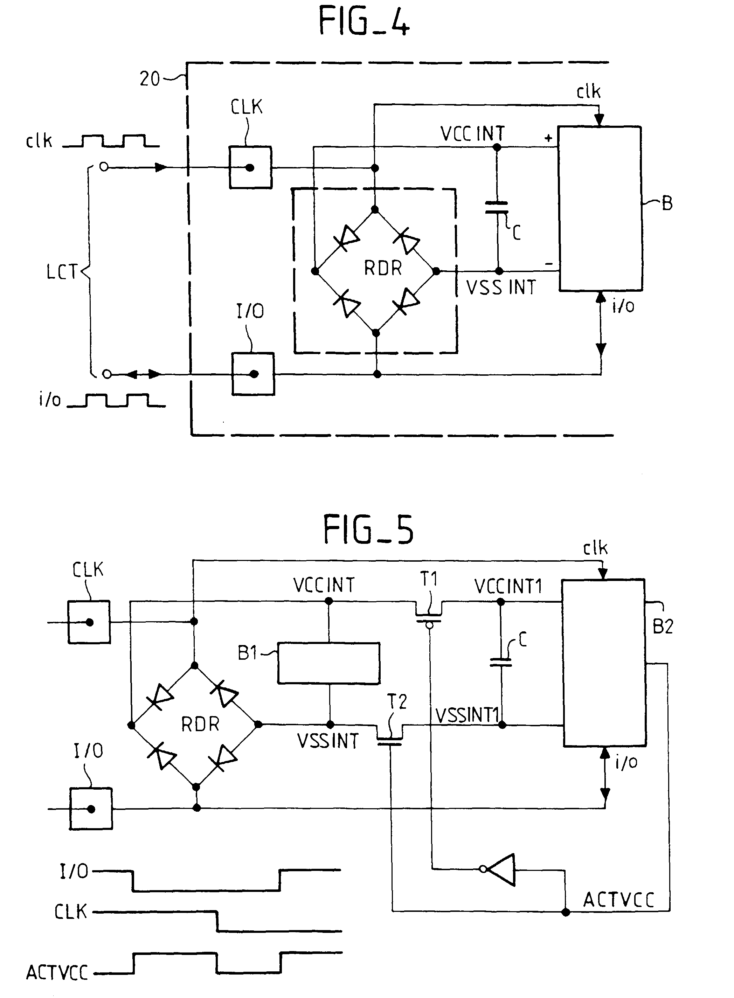

Pour que la carte puisse fonctionner avec deux contacts seulement, tout en recevant de l'énergie du lecteur, on prévoit de préférence selon l'invention les dispositions représentées aux figures 4 et 5, dans lesquelles les deux contacts I/O et CLK, qui sont des contacts d'échanges d'informations, peuvent également fournir l'énergie nécessaire à la carte.

La figure 4 représente la manière dont ceci est rendu possible selon l'invention : un circuit redresseur est connecté entre les deux contacts qui servent à l'échange d'informations entre le lecteur et la carte. Ici il s'agit bien sûr des contacts I/O et CLK, mais on pourrait envisager d'autres situations dans lesquelles il y a échange d'informations par l'intermédiaire de contacts autres que CLK et I/O et dans lesquelles on connecterait alors un redresseur entre ces deux contacts pour alimenter en énergie les circuits électroniques de la carte.

Sur la figure 4, on a désigné par la référence 20 la puce de circuit intégré contenue dans la carte, avec les plots de contact d'échange d'informations CLK (horloge) et I/O (entrée/sortie de données) ; on a donné à ces plots de contact de la puce les mêmes références qu'aux contacts extérieurs de la carte car ils leur sont directement reliés. Ces contacts sont reliés à un lecteur de carte LCT qui leur fournit des signaux d'horloge clk et fournit ou reçoit des données i/o. Les signaux sont des niveaux logiques haut et bas alternés, par exemple entre 5 volts et 0 volt.

Les circuits électroniques de la carte sont représentés globalement par un bloc de référence générale B. Ce bloc est relié directement aux contacts CLK et I/O pour recevoir les données, instructions et signaux d'horloge du lecteur, et pour lui fournir des données.

De plus, le bloc B reçoit des tensions d'alimentation continue VCCINT et VSSINT. La première est supposée la plus positive des deux.

Ces tensions d'alimentation sont obtenues à la sortie d'un redresseur RDR alimenté directement par les signaux logiques alternés présents sur les contacts CLK et I/O. Le redresseur RDR est de préférence un redresseur double alternance, par exemple un simple pont de quatre diodes connectées comme indiqué sur la figure 4. Une capacité C peut être connectée en parallèle sur la sortie du pont, entre VCCINT et VSSINT, pour lisser les variations de tension. Cette capacité peut toutefois dans certains cas être simplement constituée par les capacités parasites nécessairement présentes dans le bloc B; ceci est d'autant plus vrai que les signaux clk et i/o varient à fréquence plus élevée.

Lorsque les signaux clk et i/o sont à des niveaux logiques contraires, l'un à 5 volts par exemple et l'autre à 0 volts, le redresseur RDR fonctionne et établit sensiblement 5 volts sur VCCINT et 0 volts sur VSSINT (si on ne tient pas compte de la chute de tension dans les diodes du redresseur). Lorsque clk et i/o sont tous deux à 5 volts, le redresseur ne fonctionne pas mais tend à maintenir 5 volts sur VCCINT. Le potentiel VSSINT est flottant mais maintenu sensiblement à la masse par la capacité C. Lorsque clk et i/o sont tous deux à 0 volts, c'est le contraire : VSSINT est maintenu à 0 volt et VCCINT est flottant.

Le circuit ne fonctionnera correctement que si les intervalles de temps où clk et i/o sont identiques ne sont pas trop longs; une augmentation de valeur de la capacité C permet d'allonger ces intervalles de temps.

La figure 5 représente également un perfectionnement permettant de réduire le risque de mauvais fonctionnement dans ce cas. Les circuits électroniques de la carte sont divisés en deux blocs B1 et B2 parmi lesquels le bloc Bl présente la particularité de ne posséder que des éléments qui ne nécessitent pas la présence permanente d'une alimentation (circuits de génération d'impulsions internes, circuits logiques divers); le bloc B2 regroupe essentiellement des circuits qui ne peuvent pas se dispenser d'une alimentation continue (décodeurs, compteurs, bascules d'état). Ces blocs sont représentés comme étant complètement séparés sur la figure 5, mais il peut évidemment exister des connexions entre eux.

Le bloc B1 est directement alimenté par la tension continue VCCINT, VSSINT en sortie du pont redresseur RDR. Le bloc B2 est alimenté par une tension continue VCCINT1, VSSINT1, obtenue à partir de la première, avec des moyens d'isolation commandables pour bloquer la liaison entre le redresseur et le bloc B2. Ces moyens comprennent par exemple un transistor T1 pour interrompre la connexion entre VCCINT et VCCINT1 et un transistor T2 pour interrompre la connexion entre VSSINT et VSSINT1. Ces transistors sont commandés par un signal ACTVCC, d'activation de l'alimentation. Le signal ACTVCC est élaboré par les circuits de la carte à partir des signaux clk et i/o; il rend conducteur ou bloque les transistors selon l'état relatif de ces signaux; par exemple il les rend conducteurs lorsque clk et i/o sont à des niveaux de tension distincts et il les bloque dans le cas contraire. La capacité C est placée entre VCCINT et VSSINT1. On peut donc arrêter le fonctionnement du bloc B1 et donc limiter la consommation d'énergie par la carte lorsque les signaux clk et i/o sont tels que le potentiel VCCINT ou VSSINT devient flottant. La durée pendant laquelle on peut se permettre d'avoir clk et i/o dans le même état augmente donc.

On va maintenant expliquer en détail le procédé de communication entre la carte et son lecteur, qui permet de n'utiliser que le contact d'horloge CLK et le contact d'entrée/sortie de données I/O pour effectuer les principales opérations nécessaires dans les cartes à mémoire classiques à huit contacts.

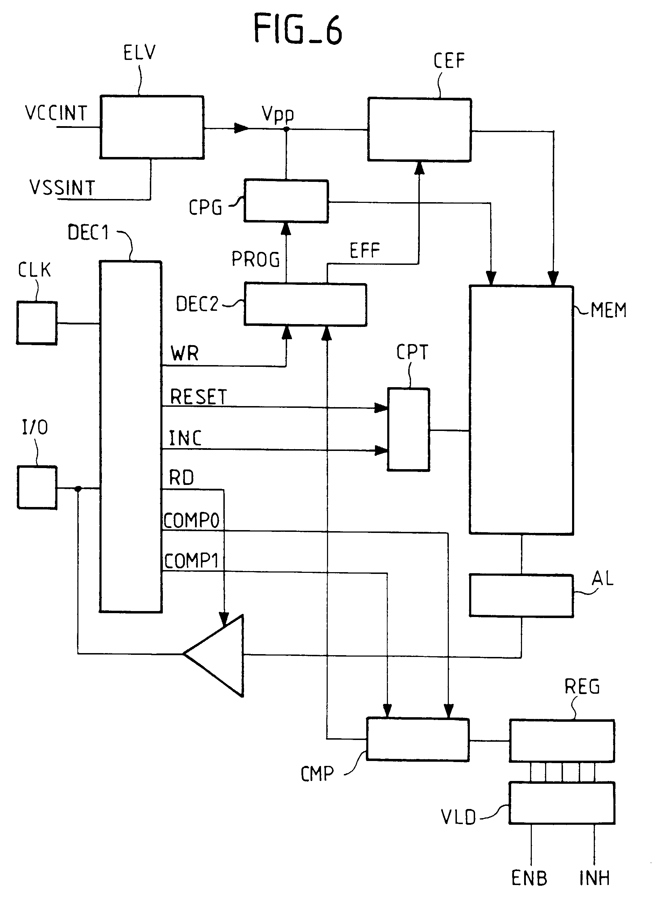

Pour simplifier les explications, un schéma général de carte à mémoire permettant de mettre en oeuvre l'invention est représenté à la figure 6. Dans ce schéma, le redresseur RDR des figures 4 et 5 n'est pas représenté.

La carte comporte une mémoire MEM, de préférence une mémoire non volatile EEPROM. Cette mémoire comporte des cellules d'information binaire que l'on peut adresser séquentiellement à l'aide d'un compteur CPT. Le compteur peut être incrémenté par une commande d'incrémentation INC. Il peut être remis à une position initiale par une commande de réinitialisation RESET. La cellule de mémoire désignée par une position déterminée du compteur peut être lue par un circuit de lecture AL commandé par une commande de lecture RD. Elle peut être programmée à un état logique 0 (définition conventionnelle) par un circuit de programmation CPG commandé par un signal PRG ou effacée (mise à l'état 1) par un circuit d'effacement CEF commandé par un signal EFF.

Si une tension de programmation ou effacement Vpp plus élevée que 5 volts est nécessaire pour les opérations d'écriture d'informations dans une cellule de mémoire de la carte (par exemple 15 volts dans le cas général), cette tension sera générée par un circuit élévateur de tension ELV, interne à la puce. Un tel circuit est classique.

Un décodeur général d'instructions DEC1 reçoit les signaux d'horloge issus du contact CLK et les signaux de données émises par le lecteur de carte sur le contact I/O. Il établit à partir de ces signaux les instructions d'incrémentation du compteur (INC), de remise à zéro (RESET), de lecture (RD), ainsi que d'autres instructions COMP0, COMP1 dont on parlera plus loin. De plus, il établit une instruction d'écriture WR. Le lecteur de carte ne peut pas, à l'aide des signaux d'horloge sur le contact CLK et des signaux sur le contact I/O établir directement une instruction de programmation à 0 différente de l'instruction d'effacement à 1. Il n'établit qu'un seul ordre générique : écriture (WR).

La carte possède un décodeur supplémentaire DEC2, qui établit une commande PRG ou une commande EFF lors de la réception du signal WR, selon l'état du bit lu immédiatement. Quant au lecteur, il émet ou n'émet pas le signal WR également en fonction de l'état du bit lu immédiatement avant (à la même position).

Le fonctionnement est donc le suivant : si le programme de fonctionnement du lecteur détermine que la cellule doit être programmée à 0 (par exemple), alors la cellule est lue (établissement de signaux CLK et I/O aptes à engendrer l'instruction interne RD), et l'information lue est transmise au lecteur. Si l'état de la cellule est déjà 0, le lecteur n'envoie pas d'ordre d'écriture; le signal WR n'est pas produit; il n'y a ni programmation ni effacement. Si au contraire l'état lu est 1, le lecteur envoie un ordre d'écriture. Parallèlement, le décodeur DEC2 reçoit l'information lue (cellule à 1), et fournit un signal PRG. Le signal EFF ne pourrait être fourni par DEC2 que si l'information lue était 0.

Les figures suivantes représentent les différentes phases du protocole de communication selon l'invention.

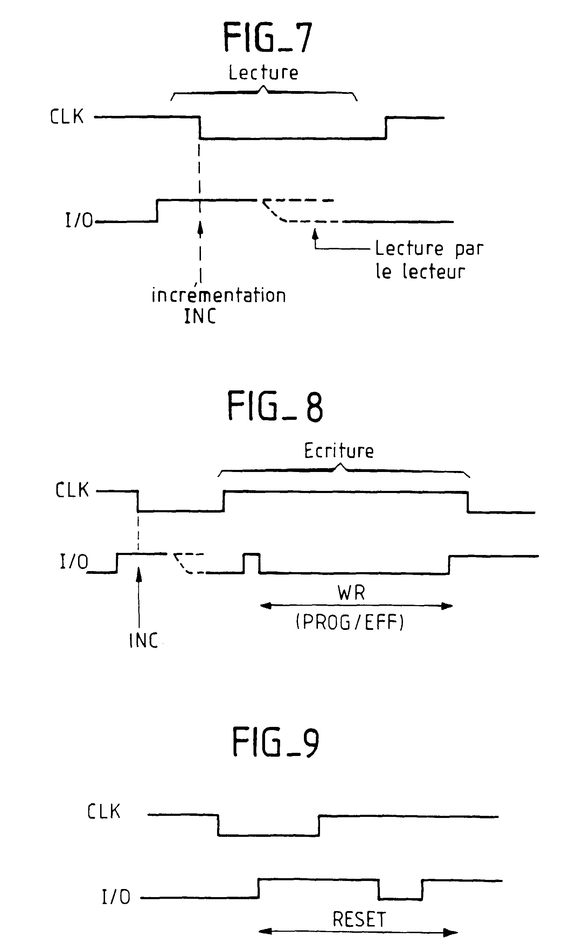

La lecture (figure 7), commence par une étape systématique d'incrémentation du compteur CPT : pendant que le signal d'horloge émis par le lecteur de carte sur CLK est à un premier niveau (1), le lecteur force le contact I/O à un premier état (1). Puis le lecteur fait passer CLK à un deuxième niveau logique (0). La transition descendante sur CLK déclenche la commande INC d'incrémentation.

Dans la suite, on parlera de niveau logique pour CLK et d'état logique pour I/O, bien que ces termes recouvrent la même chose, ceci pour distinguer les niveaux présents sur CLK des niveaux présents sur I/O : le principe du protocole de communication selon l'invention ne serait pas changé si le niveau logique 1 sur CLK correspond à un potentiel bas alors que l'état logique 1 sur I/O serait plutôt un potentiel haut. Des considérations particulières exposées ci-après font cependant préférer la solution représentée aux figures. De même, l'établissement du signal logique ACTVCC mentionné en référence à la figure 5 est évidemment concerné par le niveau relatif réel des potentiels.

Après l'incrémentation systématique, la phase de lecture se poursuit de la manière suivante : CLK étant au deuxième niveau (0), le lecteur fait passer le contact I/O en haute impédance, c'est-à-dire qu'il ne force aucun niveau sur ce contact. La commande de lecture RD est alors émise par le décodeur DEC1. L'état lu dans la cellule est transmis sur la ligne I/O qui peut librement passer soit à 0 soit à 1. Le lecteur de carte détecte au bout d'un temps déterminé, toujours pendant que CLK est à 0, l'état pris pas le contact I/O, représentant l'information stockée dans la cellule lue.

Enfin, toujours pendant que CLK est à 0, le lecteur force de préférence le contact I/O à un deuxième état (état 0), en vue d'opérations ultérieures telles que l'écriture.

La figure 8 représente la partie de protocole de communication concernant l'écriture. Cette étape suit nécessairement une opération de lecture et débute alors que CLK est à zéro et I/O est forcé à 0 par le lecteur. Le lecteur fait passer le contact CLK au premier niveau (1); puis émet une double transition sur I/O : montée à 1 puis redescente à 0. l'impulsion ainsi générée est courte; elle se situe alors que CLK reste à 1 et est interprétée par le décodeur DEC1 comme un ordre d'écriture; le signal WR est émis; il est reçu par le décodeur DEC2 qui l'interprète en fonction de la lecture précédant immédiatement. Un ordre de programmation ou au contraire d'effacement est émis. Le protocole ne permet pas deux ordres d'écriture distincts. C'est la carte qui définit la signification de l'ordre unique WR.

La programmation ou l'effacement sont des opérations plus longues que la lecture; les signaux PRG et EFF sont donc engendrés lors de la détection de l'impulsion brève émise sur I/O mais ils durent ensuite le temps nécessaire pour que la programmation ou l'effacement de la cellule soit complète. Pour cela, le lecteur émet sur CLK un créneau au niveau 1 de durée suffisamment longue (de l'ordre de plusieurs millisecondes, c'est-à-dire plusieurs dizaines ou centaines de fois plus long que le créneau CLK = 0 utilisé pour la lecture).

A ce sujet, il est intéressant de prévoir que le niveau réel de potentiel sur CLK est bien le contraire du niveau réel sur I/O pendant cette phase longue, dans les circuits utilisant le principe de la figure 4 ou 5, car alors l'alimentation en énergie se poursuit pendant toute la durée de l'écriture.

La phase d'écriture se termine normalement par la remontée de I/O à l'état 1 puis la descente de CLK à l'état 0, et ceci n'est pas autre chose qu'une nouvelle incrémentation. Toutefois elle pourrait aussi se terminer par une descente de CLK avant la remontée de I/O pour l'exécution d'une instruction de réinitialisation (RESET), ou pour l'exécution d'une opération de mise en attente (PWDWN) dont on parlera plus loin.

La phase de réinitialisation est représentée à la figure 9. Le passage de CLK au deuxième niveau (0) est suivi d'une montée de I/O au premier état (1), puis CLK repasse au premier niveau (1). Pendant que CLK est à 1, une double transition de 1 vers 0 puis de 0 vers 1 est émise par le lecteur sur I/O. Cette transition est détectée par le décodeur DEC1 et interprétée comme un ordre de réinitialisation; le signal RESET est émis et réinitialise le compteur CPT.

Dans certaines cartes à mémoire, pourvues de circuits de sécurité, on souhaite n'autoriser la communication avec le lecteur (ou certaines opérations de lecture ou d'écriture) que si un code confidentiel est introduit par l'utilisateur et vérifié par la carte. Mais la vérification doit être effectuée à l'intérieur de la carte, sans que sorte de la carte la valeur du code confidentiel. On utilise pour cela habituellement deux instructions qu'on peut appeler COMP0 et COMP1. On va montrer que ces instructions peuvent être transmises à la carte dans le protocole selon l'invention, en plus des ordres de lecture, écriture, incrémentation, réinitialisation, malgré le fait que l'échange n'utilise que deux contacts.

L'instruction COMP0 signifie que la carte doit comparer l'état d'une cellule courante (état représentant un bit du code confidentiel) à la valeur 0. L'instruction COMP1 indique que la carte doit comparer cet état à la valeur 1.

La validation par le code confidentiel consiste alors dans la succession d'opérations suivantes : le lecteur émet une succession d'ordres COMP0 et COMP1 en fonction d'un mot de plusieurs bits, 0,1, etc. A chaque fois la carte incrémente la position de cellule (signal INC), lit en interne l'état de la cellule (c'est-à-dire sans utiliser l'instruction RD, ou en tout cas sans fournir sur I/O le résultat de la lecture), compare cet état à la valeur correspondant à l'instruction, dans un comparateur CMP, stocke le résultat de la comparaison dans un registre REG. Lorsque tous les bits du code confidentiel ont été lus, les résultats de la comparaison doivent être tous identiques (comparaisons toutes bonnes) si le code introduit correspond au code stocké; au contraire le registre doit contenir des indications "comparaison fausse" si le code introduit est différent du code stocké. Un circuit de validation VLD recevant le contenu du registre REG fournit un signal de validation ENB dans le premier cas, ou un signal d'inhibition INH dans le second cas. Le signal d'inhibition INH agit pour interdire soit l'écriture soit la lecture soit encore tout le fonctionnement de la carte. Il peut éventuellement être transmis sur la ligne I/O pour informer le lecteur de carte. Dans tous les cas le code confidentiel stocké dans la mémoire ne sort pas sur le contact I/O.

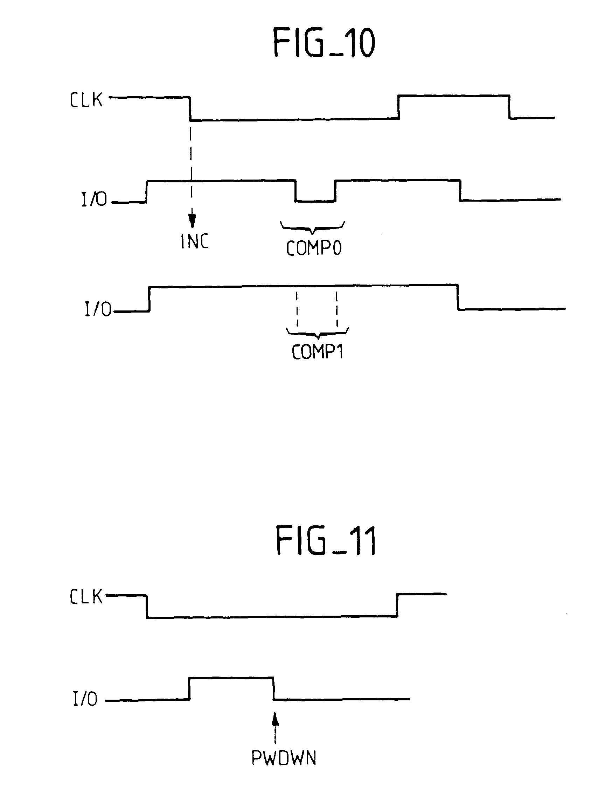

La figure 10 représente la phase d'élaboration des instructions de comparaison COMP0 et COMP1 dans le protocole à deux contacts selon l'invention.

Une incrémentation est effectuée : I/O passe à 1 puis CLK passe à 0.

Pendant que CLK reste à 0, le lecteur laisse I/O à 1 dans le cas où il veut faire exécuter COMP1, ou au contraire émet une impulsion négative courte (double transition de I/O de 1 vers 0 puis de 0 vers 1) dans le cas où l'instruction à exécuter est COMP0. Puis I/O reste à 1 et CLK remonte à 1 avant que I/O ne soit redescendu à 0 (c'est ce qui distingue une opération de lecture d'une opération de comparaison). Le décodeur DEC1 interprète la présence ou l'absence de la double transition pour élaborer un ordre COMP0 ou COMP1 à destination du comparateur CMP. Ces ordres déclenchent le déroulement de la procédure de comparaison et stockage dans le registre REG.

Enfin, on a représenté à la figure 11 une possibilité supplémentaire prévue dans le protocole selon l'invention; il s'agit d'une instruction de mise en attente (réduction de consommation). Cette instruction PWDWN est détectée par la présence d'une impulsion sur I/O (double transition, positive puis négative) pendant que CLK = 0. Une phase d'incrémentation ultérieure sera considérée comme une instruction de remise en service normal.

On a ainsi décrit un protocole de communication à deux contacts (horloge et entrée/sortie de données) permettant les mêmes fonctionnalités que les protocoles classiques de cartes à puces. Ce protocole est évidemment extrêmement avantageux dans le cas d'une carte à deux contacts, mais ce protocole peut aussi être employé avec une carte à puce qui aurait plus de deux contacts.

## Revendications

1. Support à puce du type permettant un échange réciproque d'informations entre ce support et un lecteur (LCT) dans lequel ledit support est inséré,
ce support ne comportant que deux contacts (CLK, I/O) affleurant en surface et par lesquels passent des signaux électriques représentant les informations de cet échange, l'un des contacts étant le contact d'horloge et l'autre contact étant le contact d'entrée/sortie, et
- le support comportant en outre un circuit redresseur (RDR) ayant des entrées reliées aux deux contacts et des sorties fournissant au reste du support une tension redressée (VCCINT, VSSINT) nécessaire à son alimentation.

2. Support à puce selon la revendication 1, caractérisé en ce que le redresseur est un redresseur double alternance.

3. Support à puce selon la revendication 2, caractérisé en ce que le redresseur comporte un pont de diodes et une capacité de lissage.

4. Support à puce selon l'une des revendications 1 à 3, caractérisé en ce que les circuits électroniques du support comportent une première partie (B1) alimentée directement par la tension issue du redresseur, et une deuxième partie alimentée par le redresseur par l'intermédiaire de moyens d'isolation commandables (T1, T2), pour interrompre la liaison entre le redresseur et la deuxième partie lorsque les niveaux de tension sur les deux contacts sont identiques et pour la rétablir lorsqu'ils sont différents.

5. Support à puce selon l'une des revendications 1 à 4, caractérisé en ce qu'un premier contact est un contact d'horloge (CLK) dont les fronts de montée et de descente déterminent le moment de chaque opération à exécuter par le support, et le deuxième contact est un contact d'entrée/sortie de données (I/O) dont le niveau logique représente d'une part les instructions à exécuter par le support sous contrôle du lecteur, et d'autre part les informations issues du support à destination du lecteur.

6. Support à puce selon la revendication 1, caractérisé en ce que le support comporte en outre un circuit de décodage comportant un premier décodeur (DEC1) pour établir des signaux de commande interne en fonction des signaux forcés par le lecteur sur les contacts (CLK) et (I/O), parmi lesquels un signal de commande d'écriture (WR) dans une cellule de mémoire, et un deuxième décodeur (DEC2) recevant le signal de commande d'écriture (WR) et recevant par ailleurs un signal représentant un bit d'information lu dans la cellule juste avant l'instruction d'écriture, le deuxième décodeur (DEC2) élaborant un signal de programmation (PROG) ou d'effacement (EFF) de la cellule à la réception du signal d'écriture (WR), selon que l'état lu dans la cellule est effacé ou programmé.

7. Procédé de communication entre un support à puce et un lecteur de support, par l'intermédiaire d'un contact d'horloge CLK contrôlé par le lecteur et d'un contact d'entrée/sortie de données I/O, caractérisé en ce que :
a./ l'écriture d'un bit d'information dans une cellule de mémoire du support se fait immédiatement après une opération de lecture de l'état de ce bit;
b./ un ordre d'écriture est donné par le lecteur à l'aide des contacts CLK et I/O uniquement si le bit lu est l'inverse logique du bit à écrire, l'ordre d'écriture étant donné sous une forme indépendante de la valeur de bit à écrire;
c./ en présence d'un ordre d'écriture reçu du lecteur, le support effectue une opération de programmation ou d'effacement en fonction de la valeur de bit lue.

8. Procédé selon la revendication 7, caractérisé en ce que la lecture de l'état d'un bit se déroule selon le protocole suivant, les différentes phases se déroulant dans l'ordre indiqué : forçage du contact I/O par le lecteur à un premier état, pendant que le contact CLK est à un premier niveau; premier changement de niveau de CLK; libération du potentiel du contact I/O par le lecteur, forçage par le support du contact à un état correspondant à l'information à transmettre; lecture de l'état logique du contact I/O par le lecteur avant un deuxième changement de niveau de CLK vers son premier niveau.

9. Procédé selon la revendication 8, caractérisé en ce que le lecteur force de préférence le contact I/O à un deuxième état, après la lecture et avant le deuxième changement de niveau de CLK.

10. Procédé selon l'une des revendications 8, et 9, caractérisé en ce que l'écriture s'effectue selon le protocole suivant : pendant que CLK est à son premier niveau, après une opération de lecture, une impulsion courte est fournie par le lecteur sur le contact I/O, faisant passer ce contact au premier état et le ramenant au deuxième état; l'écriture se fait après cette impulsion courte, pendant le temps que le contact I/O reste forcé au deuxième état et à condition que CLK reste au premier état.

11. Procédé selon l'une de revendications 8 à 10, caractérisé en ce qu'une opération d'incrémentation de position de cellule de mémoire à lire ou à écrire est exécutée pendant la première partie d'une opération de lecture, à savoir lors du passage de CLK au deuxième niveau après forçage de I/O au premier état.

12. Procédé selon l'une des revendications 8 à 11, dans lequel une opération de comparaison interne de l'état d'une cellule de mémoire avec un bit déterminé peut être effectuée par le support sans application de cet état sur les contacts, caractérisé en ce que les signaux émis par le lecteur pour donner une instruction de comparaison comprennent le passage du contact I/0 du deuxième état au premier, suivi du passage de CLK du premier niveau au deuxième, suivi de la présence ou l'absence d'une double transition sur le contact I/O selon l'instruction de comparaison à exécuter, suivie du passage de CLK au premier niveau et enfin suivi du passage de I/O au deuxième état.

13. Procédé selon l'une de revendications 8 à 12, caractérisé en ce qu'il comporte une étape de réinitialisation d'un compteur (CPT) de position de cellule de mémoire, cette étape étant déclenchée par la succession de signaux suivants émis par le lecteur de support : passage de CLK du premier niveau au deuxième niveau, suivi du passage du contact I/0 du deuxième état au premier, suivi du passage de CLK au premier niveau, et suivi enfin d'une double transition d'état sur le contact I/O.

## Patentansprüche

1. Chipsträger eines Typs, der einen gegenseitigen Informationsaustausch zwischen diesem Träger und einem Leser (LCT) ermöglicht, in dem der besagte Träger eingeführt ist, wobei dieser Träger nur zwei, bündig mit der Oberfläche abschließende Kontakte (CLK, I/O) umfaßt, durch die die elektrischen Signale fließen, die die Informationen dieses Austausches darstellen, wobei einer der Kontakte der Zeit kontakt und der andere Kontakt der Ein-/Ausgangskontakt ist, und wobei der Träger weiters
- eine Gleichrichterschaltung (RDR) mit an den beiden Kontakten angeschlossenen Eingängen umfaßt, und Ausgänge, die dem Rest des Trägers eine für seine Versorgung erforderliche, gleichgerichtete Spannung (VCCINT, VSSINT) liefern.

2. Chipsträger nach Anspruch 1, dadurch gekennzeichnet, daß der Gleichrichter ein Doppelwechselrichter ist.

3. Chipsträger nach Anspruch 2, dadurch gekennzeichnet, daß der Gleichrichter eine Diodenbrücke und eine Glättungskapazität umfaßt.

4. Chipsträger nach einem der Ansprüche 1 bis 3, dadurch gekennzeichnet, daß die Elektronikschaltungen des Trägers einen ersten Teil (B1) umfassen, der direkt von der vom Gleichrichter kommenden Spannung versorgt wird, und einen zweiten Teil, der vom Gleichrichter über steuerbare Isolationsmittel (T1, T2) versorgt wird, um die Verbindung zwischen dem Gleichrichter und dem zweiten Teil zu unterbrechen, wenn die Spannungsebenen an den beiden Kontakten identisch sind, und um sie wiederherzustellen, wenn sie unterschiedlich sind.

5. Chipsträger nach einer der Ansprüche 1 bis 4, dadurch gekennzeichnet, daß ein erster Kontakt ein Zeitkontakt (CLK) ist, dessen Anstiegs- und Abstiegsflanken den Zeitpunkt jeder vom Träger durchzuführenden Operation bestimmen, und der zweite Kontakt ein Dateneingangs-/Ausgangskontakt (I/O) ist, dessen logisches Niveau einerseits die vom Träger unter der Kontrolle des Lesers auszuführenden Anweisungen und andererseits die vom Träger an den Leser gerichteten Informationen darstellt.

6. Chipsträger nach Anspruch 1, dadurch gekennzeichnet, daß der Träger weiters eine Decoderschaltung umfaßt, mit einem ersten Decoder (DEC1), um die internen Steuersignale entsprechend den vom Leser an den Kontakten (CLK) und (I/O) gesetzten Signalen herzustellen, darunter ein Schreibsteuersignal (WR) in einer Speicherzelle, und einem zweiten Decoder (DEC2), der das Schreibsteuersignal (WR) empfängt sowie ein Signal, das eine in der Zelle kurz vor der Schreibanweisung gelesene Bitinformation darstellt, wobei der zweite Decoder (DEC2) beim Empfang des Schreibsignals (WR) ein Programmiersignal (PROG) oder ein Löschsignal (EFF) der Zelle erarbeitet, je nachdem, ob der in der Zelle gelesene Zustand gelöscht oder programmiert ist.

7. Kommunikationsverfahren zwischen einem Chipsträger und einem Träger-Leser, über einen vom Leser kontrollierten Zeitkontakt (CLK) und einen Dateneingangs-/Ausgangskontakt (I/O), dadurch gekennzeichnet, daß:
a./ das Schreiben eines Informationsbits in eine Speicherzelle des Trägers unmittelbar nach einer Leseoperation des Zustands dieses Bits erfolgt;
b./ ein Schreibbefehl vom Leser über die Kontakte (CLK) und (I/O) nur dann gegeben wird, wenn das gelesene Bit die logische Umkehrung des zu schreibenden Bits ist, wobei der Schreibbefehl in einer vom Wert des zu schreibenden Bits unabhängigen Form gegeben wird;
c./ der Träger bei Vorhandensein eines vom Leser empfangenen Schreibbefehls je nach Wert des gelesenen Bits eine Programmier- oder Löschoperation durchführt.

8. Verfahren nach Anspruch 7, dadurch gekennzeichnet, daß das Lesen des Zustands eines Bits nach folgendem Protokoll abläuft, wobei die einzelnen Phasen in der angegebenen Reihenfolge ablaufen: Setzen des Kontakts (I/O) durch den Leser auf einen ersten Zustand, während sich der Kontakt (CLK) auf einem ersten Niveau befindet; erste Niveau-Änderung von (CLK); Freisetzung des Potentials des Kontakts (I/O) durch den Leser, Setzen durch den Träger des Kontakts auf einen der zu übertragenden Information entsprechenden Zustand; Lesen des logischen Zustands des Kontakts (I/O) durch den Leser vor einer zweiten Niveau-Änderung von (CLK) auf sein erstes Niveau.

9. Verfahren nach Anspruch 8, dadurch gekennzeichnet, daß der Leser den Kontakt (I/O) vorzugsweise nach dem Lesen und vor der zweiten Niveau-Änderung von (CLK) auf einen zweiten Zustand setzt.

10. Verfahren nach einem der Ansprüche 8 und 9, dadurch gekennzeichnet, daß das Schreiben nach folgendem Protokoll erfolgt: wahrend sich (CLK) auf seinem ersten Niveau befindet, wird nach einer Leseoperation ein kurzer Impuls vom Leser auf den Kontakt (I/O) geliefert, wodurch dieser Kontakt auf den ersten Zustand und wieder in den zweiten Zustand gesetzt wird; das Schreiben erfolgt nach diesem kurzen Impuls, während der Zeit, in der der Kontakt (I/O) im zweiten Zustand gesetzt bleibt und unter der Voraussetzung, daß (CLK) im ersten Zustand bleibt.

11. Verfahren nach einem der Ansprüche 8 bis 10, dadurch gekennzeichnet, daß eine Inkrementierungsoperation der Position der zu lesenden oder zu schreibenden Speicherzelle während des erstens Teils einer Leseoperation durchgeführt wird, d.h. beim Übergang von (CLK) auf das zweite Niveau nach Setzen von (I/O) in den ersten Zustand.

12. Verfahren nach einem der Ansprüche 8 bis 11, bei dem eine interne Vergleichsoperation des Zustands einer Speicherzelle mit einem bestimmten Bit durch den Träger vorgenommen werden kann, ohne die Kontakte mit diesem Zustand zu beaufschlagen, dadurch gekennzeichnet, daß die vom Leser für eine Vergleichsanweisung gelieferten Signale den Übergang des Kontakts (I/O) vom zweiten auf den ersten Zustand umfassen, gefolgt vom Übergang von (CLK) vom ersten auf das zweite Niveau, gefolgt vom Vorhandensein oder von der Abwesenheit einer doppelten Transition auf den Kontakt (I/O) entsprechend der auszuführenden Vergleichsanweisung, gefolgt vom Übergang von (CLK) auf das erste Niveau, und schließlich gefolgt vom Übergang von (I/O) in den zweiten Zustand.

13. Verfahren nach einem der Ansprüche 8 bis 12, dadurch gekennzeichnet, daß es eine Neuinitialisierungsetappe eines Speicherzellenpositionszählers (CPT) umfaßt, wobei diese Etappe durch die nachstehende Folge von vom Trägerleser gesendeten Signalen ausgelöst wird: Übergang von (CLK) vom ersten auf das zweite Niveau, gefolgt vom Übergang des Kontakts (I/O) vom zweiten in den ersten Zustand, gefolgt vom Übergang von (CLK) auf das erste Niveau, und schließlich gefolgt von einer doppelten Zustandstransition auf den Kontakt (I/O).

## Claims

1. A chip support of a type enabling a two-way exchange of data between this support and a reader (LCT) in which said support is inserted,
this support including only two contacts (CLK and I/O) exposed on the surface which convey the electric signals representing the data exchanged, one of the contacts being the clock contact and the other being the input/output contact, with the support also comprising:
- an RDR rectifier circuit with inputs connected to the two contacts and outputs supplying the rest of the support with the rectified voltage (VCCINT and VSSINT) it requires for its power supply.

2. A chip support in accordance with claim 1, characterized in that the rectifier is a full-wave rectifier.

3. A chip support in accordance with claim 2, characterized in that the rectifier is equipped with a diode bridge and a smoothing capacitor

4. A chip support in accordance with one of the claims 1 to 3,, characterized in that the support's electronic circuits comprise a first part (B1) supplied directly with the voltage output by the rectifier, and a second part supplied by the rectifier via controllable insulation means (T1 and T2), to interrupt the connection between the rectifier and the second part when the voltages on the two contacts are identical, and reestablish the connection when they are different.

5. A chip support in accordance with one of claims 1 to 4, characterized in that the first contact is a clock contact (CLK) whose the leading and trailing edges determine the time of each operation to be performed by this support, and the second contact is a data input/output (I/O) contact whose logic level represents the instructions to be performed by the support sent by the reader, and the information sent by the support to the reader respectively.

6. A chip support in accordance with claim 1, characterized in that the support further comprises a first decoder circuit (DEC1) to generate the internal control signals from the signals set by the reader on the (CLK) and (I/O) contacts, which include a write control signal (WR) for writing in a memory cell, and a second decoder (DEC2) that receives the (WR) write control signal and also the signal representing a data bit read in the cell just before the write instruction, the second decoder (DEC2) generating a program (PROG) or erase (EFF) signal to respectively program or erase the cell when the write signal (WR) is received, depending on whether the state read in the cell is erased or programmed.

7. A communication process between a chip support and a support reader via a CLK clock contact controlled by the reader and an I/O data input/output contact, characterized in that:
a./ the writing of a data bit in a memory cell of the support occurs immediately after the reading of this bit's state;
b./ a write command is sent by the reader via the CLK and I/O contacts only if the bit read is the logical inverse of the bit to be written, the write command being sent in a manner independent of the bit value to be written;
c./ when a write order is received from the reader, the support executes a programming or erasure operation depending on the value of the bit read.

8. A method in accordance with claim 7, characterized in that the reading of a bit's state is carried out according to the following method, in the order indicated: the reader sets the I/O contact to an initial state, whereas the I/O contact is at an initial level; CLK changes level for the first time; the reader releases the voltage on the I/O contact, the support sets the contact to a state that corresponds to the data to be sent; the reader reads the logical state of the I/O contact before the CLK level is switched back to its initial level.

9. A method in accordance with claim 8, characterized in that the reader will first tend to set the I/O contact to a second state, after reading and before the second change in the CLK level.

10. A method in accordance with one of claims 8 or 9, characterized in that writing is carried out according to the following method: while CLK is at its initial level, after a read operation, the reader sends a short pulse to the I/O contact, which switches the latter to its initial state and brings it to its second state; the write operation is carried out after this short pulse, during the time that the I/O contact remains set to the second state and provided that CLK remains in its initial state.

11. A method in accordance with one of claims 8 to 10, characterized in that a memory cell location to be read or written is incremented during the initial part of a read operation, i.e. when CLK is switched to the second level after I/O is set to its initial state.

12. A method in accordance with one of the claims 8 to 11, in which the support may perform an internal operation comparing the state of a memory cell with a particular bit, without applying this state to the contacts, characterized in that the signals sent by the reader to send a comparison instruction include the switching of the I/O contact from the second state to the initial state, followed by the switching of CLK from the initial state to the second state, followed possibly by a double transition on the I/O contact depending on the comparison instruction to be carried out, followed by the switch of CLK to the initial level and lastly followed by the switching of I/O to the second state.

13. A method in accordance with one of claims 8 to 12, characterized in that a memory cell location counter (CPT) reset step is triggered by the following series of signals sent by the support reader: switching of CLK from the initial level to the second level, followed by the switching of the I/O contact from the second state to the initial state, followed by the switching of CLK to the initial level, then a double state transition on the I/O contact.
